# NEUE EUROPÄISCHE PATENTSCHRIFT

(11) **EP 3 218 158 B2**
(45) Veröffentlichungstag und Bekanntmachung des Hinweises auf die Entscheidung über den Einspruch: **26.10.2022**
(45) Hinweis auf die Patenterteilung: 09.10.2019
(21) Anmeldenummer: 15745482.8
(22) Anmeldetag: 03.08.2015
(51) Int. Cl.: B29C 44/34, B29C 44/50, C08L 23/00, B29K 23/00

(54) **VERFAHREN ZUR HERSTELLUNG EINES SCHAUMFOLIENLAMINATS UND DESSEN VERWENDUNG**
PROCESS FOR PRODUCING A FOAM FILM LAMINATE AND USE THEREOF
PROCÉDÉ DE FABRICATION D'UN STRATIFIÉ DE FILM DE MOUSSE ET SON UTILISATION

(30) Priorität: 11.11.2014 DE 102014222958
(43) Veröffentlichungstag der Anmeldung: 20.09.2017
(73) Patentinhaber: Benecke-Kaliko AG, 30419 Hannover (DE)
(72) Erfinder: MANI, Joseph, 73054 Eislingen (DE); MALNER, Thomas, 73033 Göppingen (DE); BÜHRING, Jürgen, 30900 Wedemark (DE); HÜLSEWEDE, Volker, 73114 Schlat (DE)
(74) Vertreter: Meissner Bolte Partnerschaft mbB
(86) Internationale Anmeldenummer: PCT/EP2015/067761
(87) Internationale Veröffentlichungsnummer: WO 2016/074811

(56) Entgegenhaltungen:
- EP-A1- 0 859 695
- EP-A1- 1 940 609
- WO-A1-2007/045536
- WO-A1-2012/100880
- JP-A- H11 302 425
- US-A1- 2002 035 164
- US-A1- 2007 004 861
- US-A1- 2011 118 370

## Beschreibung

Die Erfindung betrifft ein Verfahren zur Herstellung eines Schaumfolienlaminats mit mindestens einer kompakten Deckschicht und mindestens einer mit der Deckschicht verbundenen Schicht aus extrudiertem geschäumten Kunststoff (Schaumschicht), wobei die Herstellung der Schicht aus geschäumtem Kunststoff in der Weise erfolgt, dass ein Kunststoffmaterial mit einem bei Raumtemperatur festen chemischen Treibmittel versetzt und während oder nach der Extrusion bis zur oder über die Aktivierungstemperatur des Treibmittels erhitzt wird, um die Schicht aus geschäumtem Kunststoff zu erhalten. Ferner betrifft die Erfindung eine Kunststoffzusammensetzung für die Schaumschicht zur Durchführung des Verfahrens und eine nach dem Verfahren hergestellte mehrschichtige Kunststofffolie sowie deren Verwendung.

Aus der DE 10018196 A1 sind dekorative Flächenmaterialien auf der Basis von Polyolefinen bekannt. Für Anwendungen und Bauteile, in denen das Flächenmaterial in nachgeschalteten thermischen Umformprozessen einer starken Verstreckung (z. B. > 200 %) unterworfen ist, werden bevorzugt kompakte Folienkonstruktionen, die aus mehreren Schichten aufgebaut sein können, verwendet. Diese Materialien weisen in der Regel eine Dichte von > 800 kg/m³ bei einer Dicke von 0,5 - 3,0 mm auf, wodurch die Bauteile ein entsprechend hohes Gewicht und damit einhergehend einen hohen Rohmaterialbedarf haben.

Für Anwendungen und Bauteile, in denen das Flächenmaterial in nachgeschalteten thermischen Umformprozessen nur einer geringen Verstreckung von < 200 % unterworfen wird, können Flächenmaterialien mit mindestens einer geschäumten Schicht, sogenannte Schaumschichten, eingesetzt werden. Die Dicke der kompakten Deckschicht kann dabei auf 0,2 - 0,8 mm reduziert werden und mit einer Dichte von > 800 kg/m³ ausgebildet sein. Die geschäumte Schicht wird in der Regel mit einer Dichte von 20 - 200 kg/m³ und einer Dicke von 0,5 - 4,0 mm ausgebildet. Die geschäumte Schicht reagiert elastisch auf Druckbelastung, wodurch eine angenehme Druckhaptik der Bauteile erhalten wird. Durch die geringe Dichte der geschäumten Schicht sinken das Gewicht der Bauteile sowie der für die Herstellung notwendige Rohmaterialbedarf.

Aus der DE 10 2005 050524 A1 ist ein gattungsgemäßes Verfahren zur Herstellung eines Kunststoff-Schaummaterials offenbart. Zu dessen Herstellung werden 5 - 100 Gew.-% eines oder mehrerer auf Polyethylen basierender Kunststoffe mit einem Gewichtsanteil an Ethylen von > 50 Gew.-% sowie gegebenenfalls bis zu 95 Gew.-% eines oder mehrerer auf Polypropylen basierender Kunststoffe mit einem Gewichtsanteil an Polypropylen > 50 Gew.-% mit einem Vernetzungsmittel und einem chemischen Treibmittel sowie weiteren Prozessadditiven wie z. B. Gleitmittel, Stabilisatoren und Pigmenten gemischt. Hieraus wird durch Extrusion eine Folie hergestellt. Diese Folie wird im nachfolgenden Prozessschritt mittels ionisierender Strahlungsquelle vernetzt, wodurch die Schmelzefestigkeit erhöht wird. In einem darauf folgenden Erhitzungsprozess wird mit Hilfe des Treibmittels ein flächiges Kunststoffschaummaterial mit einer Dichte von 20 - 200 kg/m³ und einer Dicke von 0,5 - 4,0 mm erhalten. Der Schäumprozess kann vertikal in einem Schäumofen oder horizontal z. B. in einem Salzbad durchgeführt werden.

Das so erhaltenen Kunststoff-Schaummaterial kann anschließend thermisch oder durch Verkleben mit Oberflächenmaterialien auf der Basis von Polyolefinen, PVC oder Polyurethanen zu einem mehrlagigen Flächengebilde verbunden und durch einen Prägeprozess mit einer dreidimensionalen Struktur versehen werden. Anschließend kann eine Formgebung mittels Thermoformen, In-Mould Graining oder Low-pressure-moulding erfolgen. Diese Formen oder Körper finden Verwendung in Flugzeugen, Bahnfahrzeugen, Schiffen und in Kraftfahrzeugen, insbesondere als Kraftfahrzeuginnenverkleidungen oder -verkleidungsteile. Mit diesem Verfahren können zwar feinzellige Schaumschichten mit gleichmäßiger Schaumzellenverteilung erzeugt werden, jedoch kann es als nachteilig empfunden werden, dass Extrusion und Schäumung zwei separate Prozessschritte sind, wodurch das Verfahren insgesamt recht zeitaufwändig ist.

Aus der US 4,473,665 A1 ist ein Verfahren bekannt, bei dem ein Kunststoff-Schaummaterial basierend auf einer Polyolefinzusammensetzung hergestellt wird, indem die Polymermischung oberhalb des Glasübergangtemperatur mit einem inerten Gas unter Überdruck beladen, die gasbeladene Schmelze anschließend entspannt und unter die Glasübergangstemperatur abgekühlt wird. Nach diesem Verfahrensprinzip lässt sich über Extrusion oder einen Spritzgußprozess ein Kunststoff-Schaummaterial basierend auf einer Polyolefin Zusammensetzung mit einer Dichte von 20 kg/m³ - 800 kg/m³ erzeugen. Zwar können mit diesem Verfahren Flächenmaterialien mit einer Schaumschicht in einem Prozessschritt erzeugt werden, jedoch zeigen die Schaumschichten im Dichtebereich < 100 kg/m³ in der Regel eine grobzellige Schaumstruktur mit breiterer Zellgrößenverteilung, was nicht für alle Anwendungsfelder zufriedenstellend ist.

Die so erzeugten geschäumten polyolefinbasierten Flächenmaterialien finden unter anderem Anwendung im Baubereich (z. B. als Trittschallschutz bei Laminatböden, Wärmeisolierung von Rohren, Randstreifen bei der Bodenverlegung) und im Verpackungsbereich. Aufgrund des überwiegend thermoplastischen Charakters der nach diesem Verfahrensprinzip dargestellten Flächenmaterialien eignen sie sich bisher nicht für oben beschriebenen thermischen Umformprozess zur Herstellung dreidimensional geformter Körper zur Verwendung z. B. als Kraftfahrzeuginnenverkleidungen oder -verkleidungsteilen.

Weitere Verfahren zur Herstellung von mehrschichtigen Kunststofffolien sind beispielsweise aus WO 2008148918 A1, EP 291764 B1, EP 297293 A2, EP 413912 B1, EP 2027995 A1, JP 2001-096602 A, JP 2005-119274 A oder WO 9961520 A1 bekannt.

Der vorliegenden Erfindung liegt die Aufgabe zugrunde, ein Verfahren zur Verfügung zu stellen, das mit einer geringeren Zahl an Verfahrensschritten auskommt und dabei die Erzeugung mehrschichtiger Schaumfolienlaminate erlaubt, die eine feinzellige Schaumschicht mit einer gleichmäßigen Schaumzellenverteilung aufweisen. Zudem soll das Schaumfolienlaminat eine ausreichende Stabilität besitzen, die ein Tiefziehen bei Verstreckungsgraden von > 300 % ermöglicht, dabei auch thermisch umformbar sein und eine ausreichende Druck- und Wärmestabilität aufweisen, die beispielsweise die Verwendung in Armaturenbrettverkleidungen von Kraftfahrzeugen ermöglicht.

Diese Aufgabe wird gelöst durch ein Verfahren zur Herstellung eines Schaumfolienlaminats mit mindestens einer kompakten Deckschicht und mindestens einer mit der Deckschicht verbundenen Schicht aus extrudiertem geschäumten Kunststoff (Schaumschicht), wobei die Herstellung der Schicht aus geschäumtem Kunststoff in der Weise erfolgt, dass ein Kunststoffmaterial mit einem bei Raumtemperatur festen chemischen Treibmittel versetzt und während oder nach der Extrusion bis zur oder über die Aktivierungstemperatur des Treibmittels erhitzt wird, um die Schicht aus geschäumtem Kunststoff zu erhalten, wobei die Kunststoffzusammensetzung enthält:
- 15 bis 80 Gew.-Teile zumindest eines ersten Polymers, das einen Gehalt an Polyethylen von wenigstens 50 Gew.-% bezogen auf das erste Polymer besitzt,
- 15 bis 80 Gew.-Teile zumindest eines zweiten Polymers, das einen Gehalt an Polypropylen von wenigstens 50 Gew.-% bezogen auf das zweite Polymer besitzt,
- 5 bis 60 Gew.-Teile eines HMS-Polyolefins mit einer Dehnviskosität gemäß ISO 20965, Stand 15. Februar 2005, Messapparatur Typ A von 10⁴ bis 10⁷ Pa.s gemessen bei 190°C in einem Bereich der Hencky Strainrate von 0,01 s⁻¹ bis 1 s⁻¹ bei einem Hencky strain von 3,0, wobei sich die Gewichtsteile der Polymere zu 100 addieren, sowie
- 0,1 bis 5,0 Gew.-% des zumindest einen festen chemischen Treibmittels,
dadurch gekennzeichnet, dass das Kunststoffmaterial 5 bis 60 Gew.-% (bezogen auf das Kunststoffmaterial) des wenigstens einen HMS-Polyolefins (High Melt Strength Polyolefins) mit einer Dehnviskosität gemäß ISO 20965, Stand 15. Februar 2005, Messapparatur Typ A von 10⁴ bis 10⁷ Pa s gemessen bei 190°C in einem Bereich der Hencky Strainrate von 0,01 s⁻¹ bis 1 s⁻¹ bei einem Hencky strain von 3,0 enthält.

Der Erfindung liegt die Erkenntnis zugrunde, dass durch den Einsatz von HMS-Polyolefinen bei gleichzeitiger Verwendung eines chemischen Treibmittels eine geschäumte Kunststoffschicht unmittelbar mit der Extrusion erzeugt werden kann. Bei dem aus DE 10 2005 050 524 A1 bekannten Verfahren ist dies jedoch nicht möglich, da vor der Aktivierung des chemischen Treibmittels die extrudierte Kunststoffschicht zunächst nachvernetzt werden muss, da ansonsten keine gleichmäßige Schaumstruktur erhalten wird. Durch den erfindungsgemäß vorgesehenen Einsatz mindestens eines HMS-Polyolefins besitzt bei dem erfindungsgemäßen Verfahren die Polymerschmelze im Extruder jedoch bereits eine ausreichende Viskosität, dass das aus dem chemischen Treibmittel entstehende Gas im Wesentlichen in der Polymerschmelze gehalten wird, also nicht entweicht. Auf diese Weise wird nicht nur eine Schaumschicht mit gleichmäßiger Porenverteilung und feinen Zellen erzeugt, sondern der Prozess auch vereinfacht, da das Aufschäumen gleichzeitig mit der Extrusion erfolgen kann.

Im Rahmen der vorliegenden Erfindung wird unter einer kompakten Deckschicht eine Schicht aus ungeschäumtem Material verstanden, die beispielsweise durch eine Kunststofffolie oder auch eine Metallfolie gebildet sein kann.

Die nach dem erfindungsgemäßen Verfahren erzeugten Schaumfolienlaminate zeichnen sich durch eine hohe Stabilität aus, die ein Tiefziehen bei Verstreckungsgraden von > 300 %, bevorzugt > 400 %, besonders bevorzugt > 500 %, ermöglicht.

Unter der Dehnviskosität wird im Rahmen der vorliegenden Erfindung die transiente (spannungsändernde) Dehnviskosität verstanden, die nach der Norm ISO 20965 (Stand 15. Februar 2005) auf einer Messapparatur des Typs A gemäß Kapitel 5.1 dieser Norm bei 190°C in einem Bereich der Hencky Strainrate von 0,01 s⁻¹ bis 1 s⁻¹ bei einem Hencky strain von 3,0 bestimmt wird. Nach dem erfindungsgemäßen Verfahren besitzt das HMS-Polyolefin eine Dehnviskosität gemäß ISO 20965 (Stand 15. Februar 2005, Messapparatur Typ A) von 10⁴ bis 10⁷ Pa s gemessen bei 190°C in einem Bereich der Hencky Strainrate von 0,01 s⁻¹ bis 1 s⁻¹ bei einem Hencky strain von 3,0. Derartige HMS-Polyolefine sind auf dem Markt von unterschiedlichen Herstellern erhältlich. Sie sind hochverzweigt und besitzen die Eigenschaft, bei niedrigen Scherraten viskoser zu sein als Polymere gleichen Molekulargewichtes aber mit geringerem Verzweigungsgrad, um bei hohen Scherraten einen stärkeren Abfall der Viskosität zu zeigen.

Nach einer bevorzugten Ausführungsform des erfindungsgemäßen Verfahrens enthält das Kunststoffmaterial 10 bis 55 Gew.-% des HMS-Polyolefins, insbesondere 15 bis 50 Gew.-%. Dies ist besonders vorteilhaft, da ein Kunststoffmaterial mit diesen Gehalten an HMS-Polyolefinen unter üblichen Temperaturbedingungen gut extrudierbar sind und dabei gleichzeitig in der Polymerschmelze ein ausreichendes Haltevermögen für die aus dem chemischen Treibmittel generierten Gase besitzt, so dass die nach dem Extrudieren erhaltene Schicht aus geschäumtem Kunststoff sich durch eine sehr feine und gleichmäßige Porenverteilung auszeichnet.

Für das erfindungsgemäße Verfahren können als HMS-Polyolefin beispielsweise HMS-Polyethylen, HMS-Polypropylen, deren Copolymere oder Mischungen von diesen verwendet werden. Als Copolymere kommen hierbei vorzugsweise auf Polyethylen und / oder Polypropylen basierende Copolymere zum Einsatz. Hierunter werden Co- oder auch Terpolymere verstanden, bei denen der monomeren Anteil bei wenigstens 50 Gew.-% Ethylen (bei Polyethylen-basierten) beziehungsweise Propylen (bei Polypropylenbasierten) Monomeren liegt.

Für das erfindungsgemäße Verfahren können im Prinzip sämtliche dem Fachmann für die Verwendung in Kunststoffen bekannte chemische Treibmittel zum Einsatz kommen. Diese sind beispielsweise ausgewählt aus endothermen und exothermen festen chemischen Treibmitteln, wie Zitronensäure und deren Salze, insbesondere deren Alkali-, Erdalkali- und Ammoniumsalze, Natriumhydrogencarbonat, Azodicarbonamid oder Mischungen der vorgenannten Substanzen. Diese chemischen Treibmittel sind insofern bevorzugt, da sie Zersetzungstemperaturen aufweisen, die in einem Temperaturbereich liegen, der typischerweise bei der Extrusion von Kunststoffmaterialien zur Erzeugung geschäumter Schichten verwendet werden. Zudem werden bei der thermischen Zersetzung der vorgenannten chemischen Treibmittel in der Regel toxikologisch unbedenkliche Gase frei und zudem auch keine Substanzen, die sich nachteilig auf die Stabilität der verwendeten Polymere auswirken. Ein weiterer Vorteil fester chemischer Treibmittel gegenüber der unmittelbaren Einspeisung eines Gases liegt darin, dass die festen chemischen Treibmittel aufgrund ihrer Teilchenstruktur gleichzeitig als Nukleationskeime für die Gasblasenbildung fungieren, weshalb eine sehr gleichmäßige und feinporige Schaumstruktur erhalten wird.

Dem Kunststoffmaterial können auch Nukleierungsmittel zugesetzt werden, wie beispielsweise Talkum, Siliziumoxid oder Titandioxid. Die Nukleierungsmittel können für eine weitere Optimierung der Zellstruktur dienlich sein.

Typische Aktivierungstemperaturen der im Rahmen des erfindungsgemäßen Verfahrens eingesetzten festen chemischen Treibmittel liegen bei 180 °C oder mehr, insbesondere bei 200 °C oder mehr. Hierbei kann durch entsprechende Wahl des chemischen Treibmittels dessen Aktivierungstemperatur auch in der Weise gewählt werden, dass diese Aktivierungstemperatur während der Extrusion des Kunststoffmaterials diese Aktivierungstemperatur noch nicht erreicht beziehungsweise überschritten wird. Hierdurch kann der Schritt des Aufschäumens auch zu einem späteren Zeitpunkt erfolgen, sofern dies gewünscht ist. Dies kann auf an sich bekannte Weise durch einen Schäumofen oder ein Salzbad erfolgen, wie in DE 10 2005 050 524 A1 beschrieben. Bevorzugt ist es jedoch im Rahmen der vorliegenden Erfindung, dass die Aktivierungstemperatur des festen chemischen Treibmittels bereits im Extrusionsprozess erreicht beziehungsweise überschritten wird und damit der zusätzliche Schritt des nachträglichen Aufschäumens obsolet ist.

Die Einsatzmenge an festem chemischen Treibmittel richtet sich nach den gewünschten Schaumeigenschaften sowie auch an der durch das chemische Treibmittel freigesetzten relativen Gasmenge. Die Einsatzmengen an festem chemischen Treibmittel bezogen auf das Kunststoffmaterial für die Schicht aus geschäumtem Kunststoff liegen bei 0,1 bis 5 Gew.-%, bevorzugt 0,25 bis 3 und besonders bevorzugt 0,5 bis 2 Gew.-%. Diese Einsatzmengen sind vorteilhaft, weil hierbei Gasmengen freigesetzt werden, die die Schaumstoffschicht in der üblicherweise gewünschten Stärke aufschäumen.

Des Weiteren kann es von Vorteil sein, wenn das feste chemische Treibmittel in einem bestimmten Partikelgrößenbereich liegt. Hierdurch kann nach homogenem Einarbeiten des festen chemischen Treibmittels in das Polymermaterial für die Schaumstoffschicht die Porengröße gesteuert werden. Typischerweise ist es vorteilhaft, wenn die Poren eine gewisse Größe nicht überschreiben. Zu diesem Zweck kann das feste chemische Treibmittel mit einer mittleren Partikelgröße von 1 bis 25 µm eingesetzt werden, bevorzugt von 5 bis 15 µm. Die mittlere Partikelgröße bezeichnet hier den mittleren Partikeldurchmesser und kann über an sich bekannte Methoden wie Rasterelektronenmikroskopie ermittelt werden.

Das Versetzen des Kunststoffmaterials mit dem festen chemischen Treibmittel kann im Prinzip auf jede dem Fachmann hierfür bekannte Weise erfolgen. Das Kunststoffmaterial kann beim Vermischen beispielsweise als Schmelze, als Granulat oder in Pulverform vorliegen. Wird das Kunststoffmaterial in Form einer Schmelze eingesetzt, sollte diese so temperiert sein, dass sie unterhalb der Aktivierungstemperatur des Treibmittels liegt, vorzugsweise wenigstens 10 °C unterhalb der Aktivierungstemperatur des Treibmittels. Ansonsten könnte es zu einem verfrühten Aufschäumen des Kunststoffmaterials kommen, was unerwünscht ist.

Für das erfindungsgemäße Verfahren können unterschiedliche Extrusionsanlagen zum Einsatz kommen. Hier seien beispielsweise Tandemextruder oder Doppelschneckenextruder genannt. Die Austrittsdüse kann unterschiedlich ausgebildet sein, z. B. in Form einer Breitschlitzdüse, einer Ringspaltdüse, einer Viellochdüse oder einer Blockschlitzdüse. Für eine gleichzeitige Extrusion von Deckschicht und geschäumter Schicht können auch Coextrusionsanlagen eingesetzt werden.

Im Inneren des Extruders herrscht vor der Extrusionsdüse typischerweise ein Druck von mindestens 70 bar, bevorzugt mindestens 100 bar, besonders bevorzugt mindestens 120 bar. Durch die Abnahme des Druckes von mehr als 70 bar vor der Düse auf Atmosphärendruck hinter der Düse expandiert die mit den Gasen aus dem festen chemischen Treibmittel beladene Polymermischung so, dass ein durch und durch gleichmäßig geschäumtes Produkt gebildet wird. Durch dieses Herstellungsverfahren des Schaumes können Schaumdichten von 20 bis 800 kg/m³ mit einer Schaumdicke von 0,5 bis 3,0 mm erzeugt werden.

Das erfindungsgemäße Verfahren ist auf die Herstellung eines Schaumfolienlaminats gerichtet, das heißt die Schicht aus geschäumtem Kunststoff ist mit einer kompakten Deckschicht versehen. Die Kompakte Deckschicht kann beispielsweise ein Flächenmaterial auf der Basis von Polyolefinen, PVC, Polyurethanen, Polyamiden, Polyestern, Polylactiden, Cellulose oder Lignin sein. Für gute Herstellbarkeit der mehrschichtigen Kunststofffolie bei guten Produkteigenschaften hat es sich als vorteilhaft erwiesen, dass bei dem Verfahren die Deckschicht und/oder die Schicht aus geschäumtem Kunststoff auf Polyolefinen, bevorzugt auf Polyethylen oder Polypropylen, basiert.

Ebenso ist die Applikation eines auf der Dekorseite aufgebrachten Lackes für die Erzielung der Oberflächeneigenschaften wie die Kratzbeständigkeit vorteilhaft.

Die Anbindung dieser beiden Schichten kann beispielsweise nach der Extrusion und der Abkühlung der Schicht aus geschäumtem Kunststoff unterhalb der Schmelztemperatur des Kunststoffmaterials erfolgen, in dem die kompakte Deckschicht thermisch oder durch Verkleben mit der Schaumschicht verbunden wird. Alternativ hierzu können die Deckschicht und die Schicht aus geschäumtem Kunststoff auch über eine Co-Extrusion unmittelbar im Rahmen der Extrusion verbunden werden. Diese Vorgehensweise ist besonders vorteilhaft, weil hierdurch nicht nur ein fester Materialverbund zwischen der kompakten Deckschicht und der Schaumschicht erzeugt und kein zusätzlicher Klebstoff hierfür benötigt wird, sondern es fällt der ansonsten für die Verbindung dieser beiden Materialschichten erforderliche zusätzliche Schritt weg, wodurch das Verfahren einfacher gestaltet ist.

Üblicherweise schließt sich an den Extrusionsschritt der Schaumschicht noch eine nachträgliche Vernetzung des Polymermaterials zumindest der Schaumschicht an, um dieser eine ausreichende mechanische Festigkeit und Temperaturbelastbarkeit zu verleihen. Dabei kann das Vernetzen in vorteilhafter Weise erst nach dem Verbinden der Schaumschicht mit der Deckschicht gemeinsam mit letzterer erfolgen, da auf diese Weise sowohl die Deckschicht als auch die Schaumschicht vernetzt werden. Diese Ausgestaltung ist besonders vorteilhaft, wenn die Schaumschicht und die Deckschicht wie vorstehend ausgeführt wurde, über eine Co-Extrusion unmittelbar miteinander verbunden wurden. Die Vernetzung selbst kann hierbei auf jede dem Fachmann an sich bekannte Weise erfolgen, wobei vorzugsweise energiereiche Strahlung verwendet wird. Zu diesem Zweck kann beispielsweise Elektronenstrahlung eigesetzt werden.

Üblicherweise werden die erfindungsgemäß erzeugten Schaumfolienlaminate in Bereichen eingesetzt, wo zumindest die kompakte Deckschicht sichtbar ist. Bei derartigen Anwendungen, wie beispielsweise im Bereich der Armaturenbrettverkleidung, ist es oft wünschenswert, der Oberfläche des Schaumfolienlaminats aus optischen Gründen eine Strukturierung zu verleihen. Hierfür kann die Deckschicht vor der Vernetzung in einem Prägeprozess mit einer dreidimensionalen Struktur versehen werden. Diese Strukturierung lässt sich in die noch unvernetzte Deckschicht einbringen und wird durch den folgenden Vernetzungsschritt fixiert, so dass beim nachträglichen Umformen, wie beispielsweise Tiefziehen, sowie auch bei nachträglicher Temperaturbeanspruchung in der Endanwendung, wie beispielsweise starke Sonneneinstrahlung und damit verbundene Erwärmung der Oberfläche des Schaumfolienlaminats die Struktur erhalten bleibt. Durch eine nachträgliche Vernetzung der geschäumten Schicht wird die Thermoformbeständigkeit auch im Bereich niedriger Schaumdichten von < 300 kg/m³ erreicht.

Die Vernetzung kann in der Weise erfolgen, dass das Schaumfolienlaminat nach der Vernetzung ein Gelgehalt von 10 bis 80 % aufweist, gemessen nach 24-stündiger Extraktion in siedendem Xylol, bevorzugt 15 bis 65 %, besonders bevorzugt 15 bis 40 %. Ein Laminat mit einem solchen Gelgehalt zeichnet sich durch eine vorteilhafte Stabilität für die weitere Verarbeitung aus.

Das erfindungsgemäß erzeugte Schaumfolienlaminat kann abgesehen von der Deckschicht und der Schaumschicht an der Seite der Deckschicht und / oder der Seite ausgeschäumtem Kunststoff thermisch oder durch Verkleben mit weiteren Schichten, wie beispielsweise Metallfolien oder Schichten, die auf Polymeren basieren. Werden weitere Polymerschichten aufgebracht, kann als thermische Verbindungsmethoden auch die Co-Extrusion eingesetzt werden.

Ein weiterer Gegenstand der vorliegenden Erfindung betrifft eine Kunststoffzusammensetzung für eine Schaumschicht zur Durchführung des erfindungsgemäßen Verfahrens, wobei die Kunststoffzusammensetzung folgende Inhaltsstoffe enthält:
- 15 bis 80 Gew.-Teile zumindest eines ersten Polymers, das einen Gehalt an Polyethylen von wenigstens 50 Gew.-% bezogen auf das erste Polymer besitzt, wobei das erste Polymer insbesondere Polyethylen ist,
- 15 bis 80 Gew.-Teile zumindest eines zweiten Polymers, das einen Gehalt an Polypropylen von wenigstens 50 Gew.-% bezogen auf das zweite Polymer besitzt, wobei das zweite Polymer insbesondere Polypropylen ist,
- 5 bis 60 Gew.-Teile eines HMS-Polyolefins mit einer Dehnviskosität gemäß ISO 20965 (Stand 15. Februar 2005, Messapparatur Typ A) von 10⁴ bis 10⁷ Pa s gemessen bei 190°C in einem Bereich der Hencky Strainrate von 0,01 s⁻¹ bis 1 s⁻¹ bei einem Hencky strain von 3,0, wobei sich die Gewichtsteile der Polymere zu 100 addieren, sowie
- 0,1 bis 5,0 Gew.-% zumindest eines festen chemischen Treibmittels.

Bei der erfindungsgemäßen Kunststoffzusammensetzung handelt es sich bei dem ersten und auch bei dem zweiten Polymer jeweils nicht um HMS-Polyolefine.

Weitere übliche Zuschlagstoffe, wie Füllstoffe, Alterungs- und Flammschutzmittel, können in üblichen Mengen in der Zusammensetzung enthalten sein.

Mit der erfindungsgemäßen Zusammensetzung können Schaumschichten erhalten werden, die eine Schaumdichte von 200 bis 700 kg/m³ aufweisen und sich ohne Kollaps der Zellen tiefziehen lassen. Man kann so mehrschichtige Kunststofffolien mit geringem Gewicht erhalten. Der Anteil von 5 bis 60 Gew.-Teile eines HMS-Polyolefins, insbesondere in Form von HMS-Polyethylen, gewährleistet beim erhaltenen Produkt gleichmäßige Zellgröße, während der Anteil von 15 bis 80 Gew.-Teile zumindest eines Polyethylens eine ausreichende Kälteflexibilität bei guter Weichheit und günstigen Produktpreis und der Anteil von 15 bis 80 Gew.-Teile zumindest eines Polypropylens für eine gute Wärmestabilität sorgt.

Nach einer Weiterbildung der erfindungsgemäßen Kunststoffzusammensetzung kann das HMS-Polyolefin ein Polyethylen mit hoher Schmelzfestigkeit (HMS-PE) enthalten oder daraus bestehen, wobei das Polyethylen mit einer hohen Schmelzfestigkeit einen Schmelzflussindex MFI (190 °C, 2,16 kg gemäß ISO 1133) von 0,05 bis 2,0 g/10 min aufweist.

Weiterhin kann die erfindungsgemäße Kunststoffzusammensetzung auch in der Weise ausgestaltet sein, dass das HMS-Polyolefin ein Polypropylen mit einer hohen Schmelzfestigkeit (HMS-PP) enthalten oder daraus bestehen, wobei das Polypropylen mit einer hohen Schmelzfestigkeit, wobei das Polypropylen insbesondere einen Schmelzflussindex MFI (230 °C, 2,16 kg gemäß ISO 1133) von 0,05 bis 8,0 g/10 min aufweist.

Ebenso können für die erfindungsgemäße Kunststoffzusammensetzung auch beliebige Mischungen aus Polyethylen mit hoher Schmelzfestigkeit und Polypropylen mit hoher Schmelzfestigkeit eingesetzt werden.

Ein weiterer Gegenstand der vorliegenden Erfindung ist ein Schaumfolienlaminat, das nach dem erfindungsgemäßen Verfahren hergestellt oder herstellbar ist.

Schließlich betrifft die Erfindung die Verwendung eines erfindungsgemäßen Schaumfolienlaminats für die Beschichtung von Bauteilen für die Innenverkleidung von Fahrzeugen. Weitere Anwendungen liegen im Bereich der Fertigung von Bauteilen im Airbag-Bereich, die vorteilhafterweise ohne Schwächungen oder Einschnitte für das Aufreißen des Laminats beim Öffnen des Airbags auskommen. Bei der mehrschichtigen Kunststofffolie besteht auch die Möglichkeit, dass geschäumte und kompakte Kunststoffschichten nebeneinander unter einer Deckschicht angeordnet sind, so dass in unterschiedlichen Bereichen des Laminats eine Anpassung bezüglich der Haptik erfolgen kann.

Die Erfindung wird im Folgenden anhand von Ausführungsbeispielen näher erläutert, die in der folgenden Tabelle 1 dargestellt sind.

### Einsatzstoffe:

PP1: Typ: random-Polypropylen, MFI = 1,8 g/10 min bei 230 °C; 2,16 kg
PE1: Typ: Linear low density polyethylene, MFI = 1,0 g/10 min bei 190 °C; 2,16 kg
PE2: Typ: Linear low density polyethylene, MFI = 1,9 g/10 min bei 190 °C; 2,16 kg; Dehnviskosität gemäß ISO 20965 (Stand 15. Februar 2005, Messapparatur Typ A) von 10⁶ Pa·s bei 190 °C bei Hencky Strain Rate von 0,1 s⁻¹ bei einer Hencky Strain von 3,0
PP2: Typ: homo-Polypropylen, MFI = 2,0 g/10 min bei 230 °C;2,16 kg
PP3: Typ : Random heterophase polypropylene copolmer, MFI = 1,2 g/10 min bei 230 °C; 2,16 kg

### Messmethoden:

Die Dehnviskosität wurde nach der Norm ISO 20965 (Stand 15. Februar 2005) auf einer Messapparatur des Typs A gemäß Kapitel 5.1 dieser Norm bei der jeweils angegebenen Temperatur, der angegebenen Hencky Strainrate und dem genannten Hencky strain bestimmt.

Temperaturbeständigkeit: Die Prüfung der thermischen Stabilität wird mit einem 15 x 15 cm großem Schaummuster durchgeführt, auf dem mit einer Schieblehre ein 10 x 10 cm großes Kreuz von der Mitte aus gezeichnet ist. Dieses Schaummuster wird bei mehreren Temperaturen für 24 Stunden in einen Trockenschrank gelegt. Nach 24 Stunden wird der prozentuale Schrumpf in Längs- und Querrichtung gemessen.

Die Temperatur, bei der maximal ein Schrumpf von 5% in Längs- und Querrichtung auftritt, wird als thermische Stabilität des Schaumes definiert.

E-Modul: Zugversuche werden durchgeführt, um die Folien in ihrer grundlegenden Mechanik zu charakterisieren. Mit dieser Prüfung kann der E-Modul ermittelt werden. Er wird herangezogen, um die Weichheit zu beurteilen. Beim Zugversuch wird ein genormter Prüfkörper zwischen zwei Klemmbacken eingespannt und mit konstanter Traversengeschwindigkeit auseinandergezogen. Mit Hilfe einer Kraftmessdose werden dabei auftretende Kräfte aufgezeichnet. Um Proben mit unterschiedlichen Querschnitten miteinander vergleichen zu können, wird die Kraft *F* auf den Ausgangsquerschnitt *A₀* bezogen. Daraus ergibt sich die Spannung *σ*.

Die Spannung bei der maximalen aufgezeichneten Kraft wird Zugfestigkeit *σ_{M}* genannt. Als Dehnung *ε* wird die auf die Ausgangsmesslänge *L₀* des Prüfkörpers bezogene Verlängerung Δ*L* bezeichnet. Der E-Modul wird im Hooke'schen Bereich, in dem die Verformung reversibel ist, bestimmt. Dieser Bereich beschränkt sich auf geringe Dehnungen. Der E-Modul *E* ist das Verhältnis aus Spannungsänderung Δ*σ* zu Dehnungsänderung Δ*ε* und ein Maß für die Steifigkeit. Je größer *E,* desto steifer das Material. Der E-Modul wurde mittels Regression, von 0,05 % bis 1 % Dehnung, mit einer Geschwindigkeit von 1 mm/min bestimmt. Die Zugversuche werden nach DIN EN ISO 527-3 mit 2000 mm/min durchgeführt, auf die die Prüfgeschwindigkeit nach der E-Modul-Ermittlung erhöht wird. Es werden Prüfkörper des Typs 5 verwendet.

Stress bei 100% Dehnung: Gemäß ISO 1926 (Rigid cellular plastics - Determination of tensile properties) Durchführung: Zur Durchführung der Zugversuche wird eine Zugprüfmaschine der Bauart Zwick Roell Z010 der Firma Zwick verwendet. Die Prüfung wird bei Raumtemperatur durchgeführt. Der Prüfkörper für die Zugversuche bei Raumtemperatur ist der Schulterstab nach ISO-527-3 Typ 4. Zur Durchführung der Zug- / Dehnungsversuche werden aus jedem Schaummuster mindestens fünf Prüfkörper in Längs- und Querrichtung ausgestanzt. Die Probendicke wird mit einem Dickenmesser auf eine Genauigkeit von 0,01mm gemessen. Der Probenkörper wird senkrecht an den Einspannschultern in die Backen der Zugprüfmaschine eingespannt. Bei den Zugversuchen bei Raumtemperatur wird mit Dehnungsaufnehmern gearbeitet, um einen Messfehler durch eine Dehnung der Schultern auszuschließen. Die Probe wird mit einer Geschwindigkeit von 500 mm/min bis zum Bruch gedehnt.
Bruchkraft: Gemäß ISO 1926 (Rigid cellular plastics - Determination of tensile properties)
Bruchdehnung: Gemäß ISO 1926 (Rigid cellular plastics - Determination of tensile properties)

In der Tabelle 1 sind die Polymerbestandteile der jeweiligen Zusammensetzungen in Gewichtsteilen aufgelistet. Zusätzlich enthält jede Rezeptur 3 Gewichtsteile Hydrocerol 592 (60 Gew.-% Polyethylen und 40 Gew.-% Citrate). Hydrocerol 592 basiert auf einem Salz der Zitronensäure. Hergestellt wird dieses Zitrat durch Neutralisierung von Zitronensäure mit Natronlauge. Die Zitronensäure wird biochemisch fermentiert aus Melasse, also praktisch ein Naturprodukt aus nachwachsenden Rohstoffen. Das bei der Zersetzung entstehende CO2 war vorher in Biomasse gebunden, entspringt also einem Kreislauf und stellt kein zusätzliches CO2 dar. 2 Gewichtsteile UV-Stabilisator (HALS - sterisch gehindetes Phenol) und 1 Gewichtsteil schwarzer Farbstoff aus 85 Gew.-% Polyethylen und 15 Gew.-% Ruß.

**Tabelle 1: Zusammensetzung der erfindungsgemäßen Beispiele 1 bis 15**

| Beispiel | PP1 | PE1 | PP2 | PP3 | PE2 |
|---|---|---|---|---|---|
| 1 | 20 | 60 | | | 20 |
| 2 | 35 | 45 | | | 20 |
| 3 | 20 | 40 | | | 40 |
| 4 | 35 | 25 | | | 40 |
| 5 | 27,5 | 42,5 | | | 30 |
| 6 | | 60 | 20 | | 20 |
| 7 | | 45 | 35 | | 20 |
| 8 | | 40 | 20 | | 40 |
| 9 | | 25 | 35 | | 40 |
| 10 | | 42,5 | 27,5 | | 30 |
| 11 | | 60 | | 20 | 20 |
| 12 | | 45 | | 35 | 20 |
| 13 | | 40 | | 20 | 40 |
| 14 | | 25 | | 35 | 40 |
| 15 | | 42,5 | | 27,5 | 30 |

Die in der Tabelle 1 angegebenen Komponenten für die Elastomer-Zusammensetzungen wurden zunächst gemischt und auf einem Zweiwellenextruder extrudiert, wobei im Extruderkopf vor der Düse eine Temperatur von etwa 210 °C herrschte. Es wurde eine Schlitzdüse mit einer Düsenbreite von 30 cm und Düsenspalt von 0,50mm verwendet. Durch die Extrusionstemperatur wurden unmittelbar Schaumfolien mit den in der Tabelle angegebenen Dichten erhalten wurden.

Anschließend wurden die Schaumfolien ohne Deckschicht hinsichtlich ihrer physikalischen Eigenschaften untersucht. Es wurde bei den Versuchen auf eine Deckschicht verzichtet, um eine Verfälschung der Ergebnisse durch die Deckschicht zu verhindern. Die Ergebnisse sind in der folgenden Tabelle 2 zusammengefasst:

**Tabelle 2: Ergebnisse**

| Beispiel | Dichte [g/cm³] | T-Beständigkeit [°C] | E.-Modul N/mm² | Stress bei 100% Dehnung MPa | Bruchkraft [N] | Bruchdehnung [%] |
|---|---|---|---|---|---|---|
| 1 | 689 | 100 | 43,68 | 4,98 | 8,15 | 1160,3 |
| 2 | 636 | 130 | 57,16 | 18,03 | 7,03 | 1052,7 |
| 3 | 613 | 130 | 66,39 | 17,44 | 7,59 | 1090,7 |
| 4 | 612 | 120 | 49,53 | 16,43 | 7,12 | 1252,3 |
| 5 | 640 | 130 | 94,89 | 25,86 | 7,88 | 880,6 |
| 6 | 670 | 120 | 34,51 | 9,32 | 5,61 | 1066,13 |
| 7 | 604 | 130 | 117,56 | 21,66 | 8,68 | 865,2 |
| 8 | 625 | 130 | 96,26 | 17,96 | 7,18 | 663,8 |
| 9 | 609 | 120 | 59,12 | 15,06 | 7,08 | 1122,6 |
| 10 | 582 | 130 | 154,08 | 25,99 | 8,61 | 677,2 |
| 11 | 691 | 100 | 19,86 | 6,34 | 4,89 | 1255,2 |
| 12 | 637 | 130 | 51,09 | 10,87 | 5,64 | 812,1 |
| 13 | 649 | 130 | 58,56 | 10,66 | 6,23 | 783,1 |
| 14 | 582 | 100 | 42,52 | 10,48 | 5,19 | 990,3 |
| 15 | 563 | 130 | 83,61 | 15,03 | 6,41 | 760,3 |

Die Beispiele belegen, dass die erfindungsgemäßen Zusammensetzungen zur Herstellung einer Kunststoffschaumschicht beziehungsweise eines Schaumfolienlaminats im Sinne des erfindungsgemäßen Verfahrens Schaumschichten mit guten mechanischen Eigenschaften unmittelbar bei der Extrusion unter Verwendung eines festen chemischen Treibmittels erzeugt werden können. Mit anderen Worten ist es demnach nicht erforderlich, die Zusammensetzungen zunächst zu einer weitestgehend kompakten Folie zu extrudieren und nach erfolgter Vernetzung auszuschäumen, da die Zusammensetzungen aufgrund der erfindungsgemäßen Einsatzmengen an HMS-Polyolefinen auch im Extruder in Form einer Schmelze ein ausreichendes Haltevermögen im Hinblick auf die bei der Prozessführung aus dem festen chemischen Treibmittel frei werdenden Gase besitzen.

Ferner ist aus der Tabelle 2 ersichtlich, dass die geschäumten Folien ein geringes Gewicht aufweisen und dennoch genügend Stabilität bei Verstreckungsgraden von mehr als 300 % beim Tiefziehen.

Das nach dem erfindungsgemäßen Verfahren hergestellte Schaumfolienlaminat zeichnet sich durch geringe Herstellungskosten und gute Tiefzieheigenschaften aus, erlaubt Gewichtseinsparungen und benötigt durch den weniger aufwändigen Herstellungsprozess weniger Energie und Rohstoffe. Durch das geringere Gewicht wird zusätzlich im Gebrauch Laminats im automobilen Innenraum weniger Energie zur Bewegung des Fahrzeuges benötigt.

## Patentansprüche

1. Verfahren zur Herstellung eines Schaumfolienlaminats mit mindestens einer kompakten Deckschicht und mindestens einer mit der Deckschicht verbundenen Schicht aus extrudiertem geschäumten Kunststoff, wobei die Herstellung der Schicht aus geschäumtem Kunststoff in der Weise erfolgt, dass ein Kunststoffmaterial mit einem bei Raumtemperatur festen chemischen Treibmittel versetzt und während oder nach der Extrusion bis zur oder über die Aktivierungstemperatur des Treibmittels erhitzt wird, um die Schicht aus geschäumtem Kunststoff zu erhalten, wobei die Kunststoffzusammensetzung enthält:
- 15 bis 80 Gew.-Teile zumindest eines ersten Polymers, das einen Gehalt an Polyethylen von wenigstens 50 Gew.-% bezogen auf das erste Polymer besitzt,
- 15 bis 80 Gew.-Teile zumindest eines zweiten Polymers, das einen Gehalt an Polypropylen von wenigstens 50 Gew.-% bezogen auf das zweite Polymer besitzt,
- 5 bis 60 Gew.-Teile eines HMS-Polyolefins mit einer Dehnviskosität gemäß ISO 20965, Stand 15. Februar 2005, Messapparatur Typ A von 10⁴ bis 10⁷ Pa.s gemessen bei 190°C in einem Bereich der Hencky Strainrate von 0,01 s⁻¹ bis 1 s⁻¹ bei einem Hencky strain von 3,0, wobei sich die Gewichtsteile der Polymere zu 100 addieren, sowie
- 0,1 bis 5,0 Gew.-% des zumindest einen festen chemischen Treibmittels,
**dadurch gekennzeichnet, dass**
das Kunststoffmaterial 5 bis 60 Gew.-% des wenigstens einen HMS-Polyolefins mit einer Dehnviskosität gemäß ISO 20965, Stand 15. Februar 2005, Messapparatur Typ A von 10⁴ bis 10⁷ Pa s gemessen bei 190°C in einem Bereich der Hencky Strainrate von 0,01 s⁻¹ bis 1 s⁻¹ bei einem Hencky strain von 3,0 enthält.

2. Verfahren nach Anspruch 1, **dadurch gekennzeichnet, dass** das Kunststoffmaterial 10 bis 55 Gew.-% des HMS-Polyolefins enthält.

3. Verfahren nach Anspruch 1 oder 2, **dadurch gekennzeichnet, dass** das HMS-Polyolefin ausgewählt ist aus HMS-Polyethylen, HMS-Polypropylen, deren Copolymeren oder Mischungen von diesen.

4. Verfahren nach einem der vorstehenden Ansprüche, **dadurch gekennzeichnet, dass** das Treibmittel ausgewählt ist aus endothermen und exothermen festen chemischen Treibmitteln oder Mischungen von diesen.

5. Verfahren nach einem der vorstehenden Ansprüche, **dadurch gekennzeichnet, dass** die Aktivierungstemperatur des festen chemischen Treibmittels 180 °C oder mehr beträgt.

6. Verfahren nach einem der vorstehenden Ansprüche, **dadurch gekennzeichnet, dass** das Versetzen des Kunststoffmaterials mit dem Treibmittel durch Vermischen des Kunststoffmaterials in Form einer Schmelze, als Granulat oder in Pulverform mit dem Treibmittel erfolgt.

7. Verfahren nach einem der vorstehenden Ansprüche, **dadurch gekennzeichnet, dass** nach der Extrusion und der Abkühlung der Schicht aus geschäumtem Kunststoff unterhalb Schmelztemperatur des Kunststoffmaterials die kompakte Deckschicht thermisch oder durch Verkleben mit der Schaumschicht verbunden wird oder dass die Deckschicht und die Schicht aus geschäumtem Kunststoff während einer Co-Extrusion miteinander verbunden werden.

8. Verfahren nach einem der vorstehenden Ansprüche, **dadurch gekennzeichnet, dass** die geschäumte Kunststoffschicht nach dem Schäumen vernetzt wird.

9. Verfahren nach Anspruch 8, **dadurch gekennzeichnet, dass** die Deckschicht vor der Vernetzung in einem Prägeprozess mit einer dreidimensionalen Struktur versehen wird.

10. Verfahren nach Anspruch 8 oder 9, **dadurch gekennzeichnet, dass** die Vernetzung in der Weise erfolgt, dass das Schaumfolienlaminat nach der Vernetzung einen Gelgehalt von 10 - 80 % aufweist, gemessen nach 24-stündiger Extraktion in siedendem Xylol.

11. Verfahren nach einem der vorstehenden Ansprüche, **dadurch gekennzeichnet, dass** das Schaumfolienlaminat an der Seite der Deckschicht und/ oder der Schicht aus geschäumtem Kunststoff thermisch oder durch Verkleben mit weiteren auf Polymeren basierenden Schichten verbunden werden.

12. Kunststoffzusammensetzung für eine Schaumschicht zur Durchführung eines Verfahrens gemäß einem der Ansprüche 1 bis 11, **dadurch gekennzeichnet, dass** die Kunststoffzusammensetzung enthält:
- 15 bis 80 Gew.-Teile zumindest eines ersten Polymers, das einen Gehalt an Polyethylen von wenigstens 50 Gew.-% bezogen auf das erste Polymer besitzt,
- 15 bis 80 Gew.-Teile zumindest eines zweiten Polymers, das einen Gehalt an Polypropylen von wenigstens 50 Gew.-% bezogen auf das zweite Polymer besitzt,
- 5 bis 60 Gew.-Teile eines HMS-Polyolefins mit einer Dehnviskosität gemäß ISO 20965, Stand 15. Februar 2005, Messapparatur Typ A von 10⁴ bis 10⁷ Pa.s gemessen bei 190°C in einem Bereich der Hencky Strainrate von 0,01 s⁻¹ bis 1 s⁻¹ bei einem Hencky strain von 3,0, wobei sich die Gewichtsteile der Polymere zu 100 addieren, sowie
- 0,1 bis 5,0 Gew.-% zumindest eines festen chemischen Treibmittels.

13. Kunststoffzusammensetzung nach Anspruch 12, **dadurch gekennzeichnet, dass** das HMS-Polyolefin ein Polyethylen mit einer hohen Schmelzfestigkeit enthält oder daraus besteht, wobei das Polyethylen mit einer hohen Schmelzfestigkeit einen Schmelzflussindex MFI (190 °C, 2,16 kg gemäß ISO 1133) von 0,05 bis 2,0 g/10 min aufweist.

14. Kunststoffzusammensetzung nach Anspruch 12 oder 13, **dadurch gekennzeichnet, dass** das HMS-Polyolefin ein Polypropylen mit einer hohe Schmelzfestigkeit (HMS-PP) enthält oder daraus besteht.

15. Schaumfolienlaminat, hergestellt oder herstellbar nach einem Verfahren gemäß einem der Ansprüche 1 bis 11.

16. Verwendung eines Schaumfolienlaminats nach Anspruch 15 für die Beschichtung von Bauteilen für die Innenverkleidung von Fahrzeugen.

## Claims

1. Process for producing a foam film laminate comprising at least one compact covering layer and at least one layer of extruded foamed plastic joined to the covering layer, wherein the production of the layer of foamed plastic is effected in a manner where a plastics material is admixed with a chemical blowing agent which is solid at room temperature and during or after extrusion is heated to or above the activation temperature of the blowing agent to obtain the layer of foamed plastic, wherein the plastics composition contains:
- 15 to 80 parts by wt of at least one first polymer having a content of polyethylene of at least 50 wt% based on the first polymer,
- 15 to 80 parts by wt of at least one second polymer having a content of polypropylene of at least 50 wt% based on the second polymer,
- 5 to 60 parts by wt of an HMS polyolefin having a stretching viscosity according to ISO 20965 as at February 15, 2005, type A measuring apparatus of 10⁴ to 10⁷ Pa.s measured at 190°C in a Hencky strain rate range of 0.01 s⁻¹ to 1 s⁻¹ at a Hencky strain of 3.0, wherein the parts by weight of the polymers sum to 100, and
- 0.1 to 5.0 wt% of the at least one solid chemical blowing agent.
**characterized in that**
the plastics material contains 5 to 60 wt% of the at least one HMS polyolefin having a stretching viscosity according to ISO 20965 as at February 15, 2005, type A measuring apparatus of 10⁴ to 10⁷ Pa.s measured at 190°C in a Hencky strain rate range of 0.01 s⁻¹ to 1 s⁻¹ at a Hencky strain of 3.0.

2. Process according to Claim 1, **characterized in that** the plastics material contains 10 to 55 wt% of the HMS polyolefin.

3. Process according to Claim 1 or 2, **characterized in that** the HMS polyolefin is selected from HMS polyethylene, HMS polypropylene, copolymers thereof or mixtures thereof.

4. Process according to any of the preceding claims, **characterized in that** the blowing agent is selected from endothermic and exothermic solid chemical blowing agents, or mixtures thereof.

5. Process according to any of the preceding claims, **characterized in that** the activation temperature of the solid chemical blowing agent is 180°C or more.

6. Process according to any of the preceding claims, **characterized in that** the admixing of the plastics material with the blowing agent is effected by mixing the plastics material in the form of a melt, as a pellet material or in powder form with the blowing agent.

7. Process according to any of the preceding claims, **characterized in that** after extrusion and cooling of the layer of foamed plastic below the melting temperature of the plastics material the compact covering layer is joined to the foam layer by thermal means or by adhesive bonding or that the covering layer and the layer of foamed plastic are joined to one another during a coextrusion.

8. Process according to any of the preceding claims, **characterized in that** the foamed plastic layer is crosslinked after foaming.

9. Process according to Claim 8, **characterized in that** the covering layer is provided with a three-dimensional texture in an embossing process before crosslinking.

10. Process according to Claim 8 or 9, **characterized in that** the crosslinking is effected in such a way that after crosslinking the foam film laminate has a gel content of 10 - 80 %, measured after 24 hour extraction in boiling xylene.

11. Process according to any of the preceding claims, **characterized in that** the foam film laminate is joined to further layers based on polymers, by thermal means or by adhesive bonding, on the side of the covering layer and/or the layer of foamed plastic.

12. Plastics composition for a foam layer for performing a process according to any of Claims 1 to 11, **characterized in that** the plastics composition contains:
- 15 to 80 parts by wt of at least one first polymer having a content of polyethylene of at least 50 wt% based on the first polymer,
- 15 to 80 parts by wt of at least one second polymer having a content of polypropylene of at least 50 wt% based on the second polymer,
- 5 to 60 parts by wt of an HMS polyolefin having a stretching viscosity according to ISO 20965 as at February 15, 2005, type A measuring apparatus of 10⁴ to 10⁷ Pa.s measured at 190°C in a Hencky strain rate range of 0.01 s⁻¹ to 1 s⁻¹ at a Hencky strain of 3.0, wherein the parts by weight of the polymers sum to 100, and
- 0.1 to 5.0 wt% of at least one solid chemical blowing agent.

13. Plastics composition according to Claim 12, **characterized in that** the HMS polyolefin contains or consists of a high melt strength polyethylene, wherein the high melt strength polyethylene has a melt flow index MFI (190°C, 2.16 kg according to ISO 1133) of 0.05 to 2.0 g/10 min.

14. Plastics composition according to Claim 12 or 13, **characterized in that** the HMS polyolefin contains or consists of a high melt strength polypropylene (HMS-PP).

15. Foam film laminate produced or producible by a process according to any of Claims 1 to 11.

16. Use of a foam film laminate according to Claim 15 for coating of components for vehicle interior trim.

## Revendications

1. Procédé de fabrication d'un stratifié de feuilles de mousse comprenant au moins une couche de recouvrement compacte et au moins une couche de matière plastique moussée extrudée reliée avec la couche de recouvrement, la fabrication de la couche de matière plastique moussée ayant lieu de telle sorte qu'une matière plastique est mélangée avec un agent gonflant chimique solide à température ambiante et portée jusqu'à ou au-dessus de la température d'activation de l'agent gonflant pendant ou après l'extrusion, afin d'obtenir la couche de matière plastique moussée, la composition de matière plastique contenant :
- 15 à 80 parties en poids d'au moins un premier polymère, qui présente une teneur en polyéthylène d'au moins 50 % en poids, par rapport au premier polymère,
- 15 à 80 parties en poids d'au moins un deuxième polymère, qui présente une teneur en polypropylène d'au moins 50 % en poids, par rapport au deuxième polymère,
- 5 à 60 parties en poids d'une polyoléfine HMS ayant une viscosité en allongement selon ISO 20965, du 15 février 2005, type d'appareil de mesure A, de 10⁴ à 10⁷ Pa s, mesurée à 190 °C dans une plage de taux de déformation de Hencky de 0,01 s⁻¹ à 1 s⁻¹ à une déformation de Hencky de 3,0, la somme des parties en poids des polymères étant de 100, et
- 0,1 à 5,0 % en poids de l'au moins un agent gonflant chimique solide,
**caractérisé en ce que**
la matière plastique contient 5 à 60 % en poids d'au moins une polyoléfine HMS ayant une viscosité en allongement selon ISO 20965, du 15 février 2005, type d'appareil de mesure A, de 10⁴ à 10⁷ Pa s, mesurée à 190 °C dans une plage de taux de déformation de Hencky de 0,01 s⁻¹ à 1 s⁻¹ à une déformation de Hencky de 3,0.

2. Procédé selon la revendication 1, **caractérisé en ce que** la matière plastique contient 10 à 55 % en poids de la polyoléfine HMS.

3. Procédé selon la revendication 1 ou 2, **caractérisé en ce que** la polyoléfine HMS est choisie parmi le polyéthylène HMS, le polypropylène HMS, leurs copolymères ou les mélanges de ceux-ci.

4. Procédé selon l'une quelconque des revendications précédentes, **caractérisé en ce que** l'agent gonflant est choisi parmi les agents gonflants chimiques solides endothermiques et exothermiques ou les mélanges de ceux-ci.

5. Procédé selon l'une quelconque des revendications précédentes, **caractérisé en ce que** la température d'activation de l'agent gonflant chimique solide est de 180 °C ou plus.

6. Procédé selon l'une quelconque des revendications précédentes, **caractérisé en ce que** le mélange de la matière plastique avec l'agent gonflant a lieu par mélange de la matière plastique sous la forme d'une masse fondue, sous la forme d'un granulat ou sous la forme d'une poudre avec l'agent gonflant.

7. Procédé selon l'une quelconque des revendications précédentes, **caractérisé en ce qu'** après l'extrusion et le refroidissement de la couche de matière plastique moussée en dessous de la température de fusion de la matière plastique, la couche de recouvrement compacte est reliée thermiquement ou par collage avec la couche de mousse, ou **en ce que** la couche de recouvrement et la couche de matière plastique moussée sont reliées l'une avec l'autre pendant une co-extrusion.

8. Procédé selon l'une quelconque des revendications précédentes, **caractérisé en ce que** la couche de matière plastique moussée est réticulée après le moussage.

9. Procédé selon la revendication 8, **caractérisé en ce que** la couche de recouvrement est munie d'une structure tridimensionnelle avant la réticulation par un processus de gaufrage.

10. Procédé selon la revendication 8 ou 9, **caractérisé en ce que** la réticulation a lieu de telle sorte que le stratifié de feuilles de mousse présente après la réticulation une teneur en gel de 10 à 80 %, mesurée après une extraction de 24 heures dans du xylène à l'ébullition.

11. Procédé selon l'une quelconque des revendications précédentes, **caractérisé en ce que** le stratifié de feuilles de mousse est relié sur le côté de la couche de recouvrement et/ou de la couche de matière plastique moussée thermiquement ou par collage avec d'autres couches à base de polymères.

12. Composition de matière plastique pour une couche de mousse pour la réalisation d'un procédé selon l'une quelconque des revendications 1 à 11, **caractérisée en ce que** la composition de matière plastique contient :
- 15 à 80 parties en poids d'au moins un premier polymère, qui présente une teneur en polyéthylène d'au moins 50 % en poids, par rapport au premier polymère,
- 15 à 80 parties en poids d'au moins un deuxième polymère, qui présente une teneur en polypropylène d'au moins 50 % en poids, par rapport au deuxième polymère,
- 5 à 60 parties en poids d'une polyoléfine HMS ayant une viscosité en allongement selon ISO 20965, du 15 février 2005, type d'appareil de mesure A, de 10⁴ à 10⁷ Pa s, mesurée à 190 °C dans une plage de taux de déformation de Hencky de 0,01 s⁻¹ à 1 s⁻¹ à une déformation de Hencky de 3,0, la somme des parties en poids des polymères étant de 100, et
- 0,1 à 5,0 % en poids d'au moins un agent gonflant chimique solide.

13. Composition de matière plastique selon la revendication 12, **caractérisée en ce que** la polyoléfine HMS contient un polyéthylène à haute résistance à l'état fondu ou en est constituée, le polyéthylène à haute résistance à l'état fondu présentant un indice de fluidité à chaud MFI (190 °C, 2,16 kg selon ISO 1133) de 0,05 à 2,0 g/10 minutes.

14. Composition de matière plastique selon la revendication 12 ou 13, **caractérisée en ce que** la polyoléfine HMS contient un polypropylène à haute résistance à l'état fondu (HMS-PP) ou en est constituée.

15. Stratifié de feuilles de mousse, fabriqué ou pouvant être fabriqué par un procédé selon l'une quelconque des revendications 1 à 11.

16. Utilisation d'un stratifié de feuilles de mousse selon la revendication 15 pour le revêtement de composants pour l'habillage intérieur de véhicules.
